# FASCICULE DE BREVET EUROPEEN

(11) **EP 0 618 114 B1**
(45) Date de publication et mention de la délivrance du brevet: **30.07.1997**
(21) Numéro de dépôt: 94400711.1
(22) Date de dépôt: 01.04.1994
(51) Int. Cl.: B60T 8/40, B60T 13/66

(54) **Dispositif de freinage et pompe piézoélectrique de commande**
Bremseinrichtung und piezogetriebene Pumpe
Brake system and piezo-driven pump

(30) Priorité: 02.04.1993 FR 9303884
(43) Date de publication de la demande: 05.10.1994
(73) Titulaire: Société Anonyme dite: REGIE NATIONALE DES USINES RENAULT, 92109 Boulogne Billancourt (FR)
(72) Inventeur: Minier, Pascale, F-78400 Chatou (FR); Guyomar, Daniel, F-06200 Nice (FR); Sauzade, Jean-Denis, Commanderie Saint-Christophe, F-06130 Grasse (FR)

(56) Documents cités:
- DE-A- 4 112 592
- US-A- 4 738 493

## Description

La présente invention concerne un dispositif de freinage à pompe piézo-électrique et une pompe comprenant par exemple un organe d'actionnement piézocéramique pour produire la pression de freinage.

L'invention concerne plus particulièrement un dispositif de freinage à commande piézoélectrique pour véhicule automobile comprenant :
- un récepteur actionné par une pression de fluide,
- une pompe piézoélectrique de mise en pression du fluide,
- un réservoir de fluide d'alimentation de ladite pompe,
- des vannes de contrôle de pression du fluide délivré par la pompe,
- un organe d'actionnement du récepteur,
- des capteurs de pression du fluide en différents points du circuit hydraulique, et une unité centrale de traitement de signaux.

La publication US-4.738.493 décrit un dispositif de freinage qui utilise une pompe piézoélectrique qui permet de faire varier la pression de freinage. La mise en pression du fluide est opérée par une pédale de frein.

Ce dispositif utilise un circuit hydraulique entre la pédale de frein et un récepteur.

La présente invention a pour objet de proposer un dispositif de freinage et une pompe piézoélectrique de commande dans lequel la liaison hydraulique entre la pédale et le récepteur est partiellement supprimée.

L'invention a également pour objet un dispositif de freinage et une pompe piézoélectrique de commande dans lequel la mise en pression du fluide est assurée par la pompe piézoélectrique.

L'invention a également pour objet une pompe piézoélectrique trouvant notamment application dans un dispositif de freinage.

Un dispositif de freinage et pompe piézoélectrique correspondant à l'invention est décrit à la revendication 1.

On comprendra mieux les buts, aspects et caractéristiques de la présente invention d'après la description donnée ci-après d'un mode de réalisation de l'invention, présenté à titre d'exemple non limitatif, en se référant aux dessins annexés, dans lesquels :
- la figure 1 représente un schéma fonctionnel du dispositif de freinage selon l'invention.
- la figure 2 montre une coupe longitudinale de la pompe piézoélectrique selon un mode particulier de réalisation de l'invention,
- la figure 3 est une vue en coupe de la pompe piézoélectrique représentée suivant la ligne A-A de la figure 2.

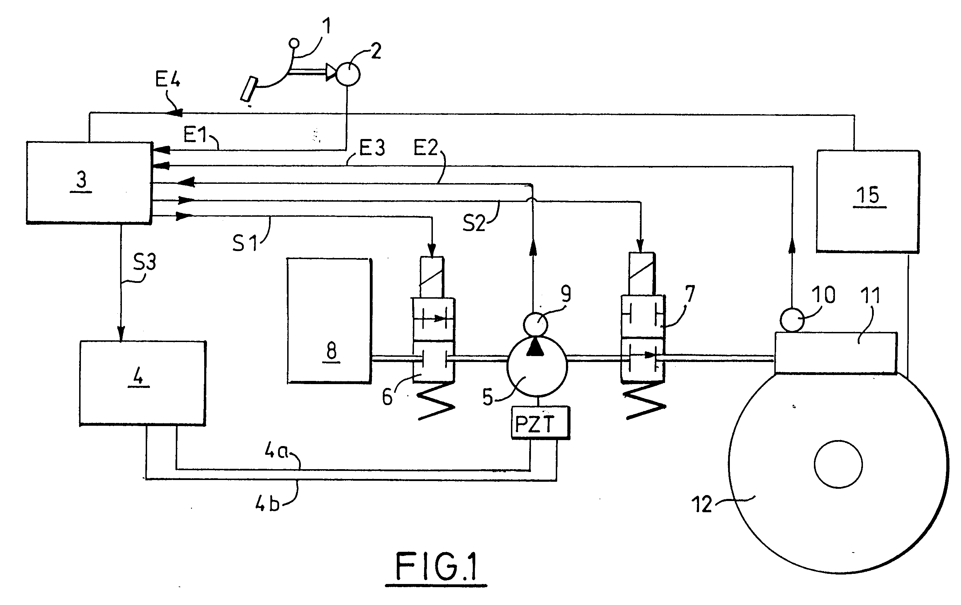

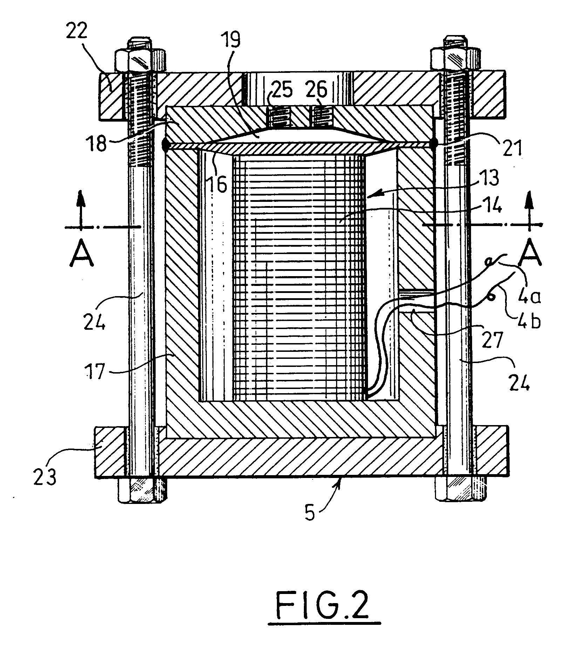

Conformément aux figures 1 et 2, seules les parties constitutives nécessaires à la compréhension de l'invention ont été représentées.

La figure 1 représente un schéma fonctionnel du dispositif selon l'invention appliqué au freinage d'une roue (12) d'un véhicule automobile.

La roue (12) peut être freinée en rotation par des organes de friction (non représentés) solidaires d'un récepteur. Les organes de friction sont amenés en contact étroit avec un élément lié à la roue, lors de l'actionnement du récepteur par un fluide sous pression.

Selon un mode particulier de réalisation de l'invention, le récepteur est constitué par un cylindre de roue (11).

Ce fluide est mis sous pression par l'actionnement par le conducteur du véhicule d'un organe d'actionnement qui est constitué par une pédale (1) selon un mode particulier de réalisation de l'invention.

Un transducteur (2) relié d'une part à la pédale et de l'autre à une unité centrale (3) transmet en entrée un signal E1 représentatif de l'actionnement de la pédale (1).
L'unité centrale (3) est en outre connectée en entrée à des capteurs de pression (9,10) qui lui délivrent respectivement des signaux E2 et E3 et à un module (15) qui lui délivre des signaux E4 caractéristiques de la dynamique de la roue, notamment l'accélération et la vitesse angulaires de celle-ci.

L'unité centrale (3) est connectée en sortie à deux vannes de contrôle (6,7) et à un bloc d'alimentation (4) haute tension alternative auxquels elle délivre respectivement des signaux S1, S2 et S3.

Le bloc d'alimentation est relié par des fils (4a) et (4b) à une pompe (5).

Une première vanne de contrôle (6) est reliée par des conduites hydrauliques à un réservoir (8) d'une part et à la pompe (5) de l'autre alors que la seconde vanne de contrôle (7) est reliée à la pompe (5) d'une part et à un cylindre de roue (11) par des conduites hydrauliques.

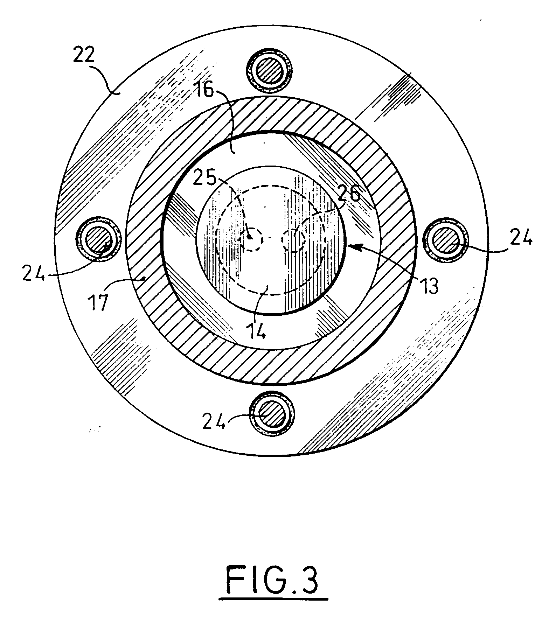

En référence aux figures 2 et 3, la pompe (5) comprend un empilement (13) piézoélectrique à disques (14) céramiques polarisés dans le sens de l'épaisseur. L'empilement (13) piézoélectrique est disposé dans une cavité d'un corps de pompe (17). Les disques (14) sont séparés par des électrodes, non représentées sur les figures, lesquelles sont alternativement connectées aux fils (4a) et (4b).
En appliquant une différence de potentiel sur les fils (4a,4b), l'empilement (13) piézoélectrique va se dilater ou se contracter axialement suivant le signe de celle-ci.

L'empilement (13) piézoélectrique est précontraint entre le corps de pompe (17) auquel est fixé un des disques extrêmes de l'empilement et une membrane (16) vibrante à laquelle est fixée l'autre disque extrême.

Une culasse (18), dont la forme définit en association avec la membrane (16) une chambre (19), est fixée par un cordon de soudure (21) annulaire à ladite membrane (16) et au corps de pompe (17), ce qui assure l'étanchéité de la chambre (19).

La rigidité de l'ensemble constitué par la culasse (18) et le corps de pompe (17) est assurée par le dessin de la chambre (19) ainsi que par des brides (22,23) disposées entre la culasse et le corps de pompe (17), brides reliées entre elles par quatre tirants (24).

Deux trous filetés (25,26) sont aménagés dans la culasse (18) afin d'admettre et de refouler un liquide. Les phases d'admission et de refoulement sont contrôlées par les vannes de contrôle (6,7).

Un trou (27) pratiqué dans le corps de pompe (17) permet de conserver la pression atmosphérique à l'intérieur de celui-ci et de permettre le passage des fils (4a,4b) qui relient l'empilement (13) piézoélectrique au bloc d'alimentation (4) électrique.

Conformément à la description précédente et aux figures 1,2,3 le fonctionnement du dispositif est le suivant.

Lorsque la pédale (1) est actionnée par le conducteur, celle-ci agit sur un transducteur (2) qui convertit la force exercée sur la pédale en un signal de consigne E1 transmis à l'unité centrale (3).

En fonction de ce signal de consigne E1, l'unité centrale (3) envoie un signal de commande S3 au bloc d'alimentation (4), lequel génère un champ électrique de l'ordre de 500 V/mm à une fréquence de 100 Hz, ce qui dilate et contracte l'empilement (13) piézoélectrique à cette fréquence. L'empilement (13) piézoélectrique entraîne dans son mouvement alternatif la membrane (16) qui lui est fixée.

Le jeu d'ouverture et de fermeture des vannes de contrôle (6,7) dont le temps de réponse est compatible avec la fréquence de fonctionnement, permet de générer une surpression dans la chambre (19) ce qui élève à chaque cycle la pression au niveau du cylindre de roue (11). Pour optimiser le temps de montée en pression qui doit être le plus court possible, la gestion des vannes de contrôle (6,7) exige un retour d'information sur la pression différentielle obtenue entre la chambre (19) et le cylindre de roue (11).

Ces informations proviennent des capteurs de pression (9,10). Les signaux E2, E3 émis par ces capteurs sont transmis à l'unité centrale (3) et traités par celle-ci en fonction du signal de consigne E1 issu du transducteur (2) et des signaux E4 délivrés par le module (15).
En fonction de ce traitement, des signaux S1, S2 de commande contrôlent l'ouverture et la fermeture des vannes de contrôle (6,7). En particulier, lorsque vanne de contrôle (6) est fermée, la vanne de contrôle (7) est ouverte et la pompe (5) refoule le fluide contenu dans sa chambre (19) dans le cylindre de roue (11).

Le dispositif proposé permet de réaliser un freinage indépendant sur chaque roue (12) du véhicule, De plus, le dispositif proposé réalise une fonction d'antiblocage avec les seuls éléments proposés, puisque la pression délivrée par la pompe (5) au cylindre de roue (11) est modulée en fonction des signaux E4 délivrés par le module (15).

## Revendications

1. Dispositif de freinage et pompe piézoélectrique de commande pour véhicules automobiles comprenant :
- un récepteur actionné par une pression de fluide,
- une pompe piézoélectrique (5) de mise en pression du fluide,
- un réservoir (8) de fluide d'alimentation de ladite pompe,
- des vannes de contrôle (6,7) de pression du fluide délivré par la pompe,
- un organe d'actionnement du récepteur,
- des capteurs de pression (9,10) du fluide en différents points du circuit hydraulique de freinage,
et une unité centrale (3) de traitement de signaux, l'organe d'actionnement du récepteur délivrant un signal de commande à l'unité centrale disposée entre ledit organe d'actionnement et la pompe, laquelle est pilotée à partir de ladite unité centrale par l'intermédiaire d'un bloc d'alimentation (4) électrique conjointement avec les vannes de contrôle (6,7), respectivement montées entre le réservoir (8) et la pompe (5) et entre ladite pompe (5) et un récepteur, en réponse à des signaux E1 délivrés par l'organe d'actionnement,
en réponse à des signaux E2, E3 issus de capteurs de pression (9,10) du fluide, détectant respectivement la pression régnant dans la chambre (19) de compression du fluide et la pression exercée par le fluide sur un récepteur, et en réponse des signaux E4 caractéristiques de la dynamique de la roue.

2. Dispositif selon la revendication 1, caractérisé par le fait que la pompe (5) possède un empilement piézoélectrique (13) à disques (14) céramiques dont un disque extrême est solidaire d'une membrane (16) vibrante qui délimite avec une culasse (18) à orifices (25,26) d'entrée et de sortie du fluide, la chambre de compression (19) du fluide.

3. Dispositif selon la revendication 2, caractérisé en ce que l'empilement piézoélectrique (13) est disposé dans une cavité d'un corps de pompe (17) et en ce que l'autre disque extrême est solidaire du corps de pompe.

4. Dispositif selon la revendication 3, caractérisé en ce que la culasse (18), le corps de pompe (17) et la membrane (16) sont liés par une soudure annulaire à fonction d'étanchéité de la chambre de compression.

5. Dispositif selon la revendication 2, 3 ou 4, caractérisé en ce que le corps de pompe (17) et la culasse (18) sont disposés entre deux brides reliées entre elles par des tirants (24).

6. Pompe piézoélectrique de commande selon l'une quelconque des revendications précédentes, caractérisée par le fait qu'elle est intégrée entre un réservoir (8) et un récepteur d'un dispositif de freinage d'une roue de véhicule automobile.

## Claims

1. A braking device and piezoelectric control pump for automobile vehicles, comprising:
• a receiver actuated by a fluid pressure,
• a piezoelectric pump (5) for pressurising the fluid,
• a tank (8) for supplying fluid to this pump,
• valves (6, 7) for controlling the pressure of the fluid supplied by the pump,
• an actuation member for the receiver,
• pressure sensors (9, 10) for the fluid at different points of the hydraulic braking circuit,
and a central signal processing unit (3), the receiver actuation member supplying a control signal to the central unit disposed between the actuation member and the pump, which is driven by the central unit via an electrical supply unit (4) together with the control valves (6, 7), mounted respectively between the tank (8) and the pump (5) and between this pump (5) and a receiver, in response to signals E1 supplied by the actuation member, in response to signals E2, E3 from fluid pressure sensors (9, 10) respectively detecting the pressure in the fluid compression chamber (19) and the pressure exerted by the fluid on a receiver and in response to signals E4 characteristic of the wheel dynamics.

2. A device as claimed in claim 1, characterised in that the pump (5) comprises a piezoelectric stack (13) with ceramic disks (14), wherein an end disk is rigid with a vibrating diaphragm (16) which bounds, together with a yoke (18) having fluid inlet and outlet openings (25, 26), the fluid compression chamber (19).

3. A device as claimed in claim 2, characterised in that the piezoelectric stack (13) is disposed in a cavity of a pump body (17) and in that the other end disk is rigid with the pump body.

4. A device as claimed in claim 3, characterised in that the yoke (18), the pump body (17) and the diaphragm (16) are connected by an annular weld adapted to render the compression chamber leak-tight.

5. A device as claimed in claim 2, 3 or 4, characterised in that the pump body (17) and the yoke (18) are disposed between two flanges connected together by tie-rods (24).

6. A piezoelectric control pump as claimed in any one of the preceding claims, characterised in that it is integrated between a tank (8) and a receiver of a braking device of an automobile vehicle wheel.

## Patentansprüche

1. Bremsvorrichtung mit piezoelektrisch betätigter Pumpe für Kraftfahrzeuge, aufweisend:
- Einen durch einen Fluiddruck betätigten Empfänger,
- eine piezoelektrische Pumpe (5), zum Unterdrucksetzen des Fluids,
- einen Fluidvorratsbehälter (8) zur Versorgung der Pumpe,
- Drucksteuerventile (6, 7) für das durch die Pumpe geförderte Fluid,
- ein Betätigungsorgan für den Empfänger,
- Druckfühler (9, 10) für das Fluid an unterschiedlichen Punkten des Bremshydraulikkreises, und
- eine Zentraleinheit (3) zur Signalverarbeitung,
wobei das Betätigungsorgan für den Empfänger der Zentraleinheit ein Signal zuführt, die zwischen dem Betätigungsorgan und der Pumpe angeordnet ist, die von der Zentraleinheit unter Zwischenschaltung eines elektrischen Versorgungsblocks (4) gemeinsam mit den Regelventilen (6, 7) gesteuert wird, die jeweils zwischen dem Vorratsbehälter (8) und der Pumpe (5) und zwischen der Pumpe (5) und einem Empfänger angebracht sind,
ansprechend auf Signale E1, die durch das Betätigungsorgan geliefert werden,
ansprechend auf Signale E2, E3, die von den Fluiddruckfühlern (9, 10) ausgegeben werden, die jeweils den Druck ermitteln, der in der Fluiddruckkammer (19) herrscht und den Druck, der durch das Fluid auf einen Empfänger ausgeübt wird,
und ansprechend auf Signale E4, die für die Dynamik des Rads charakteristisch sind.

2. Vorrichtung nach Anspruch 1, dadurch gekennzeichnet, daß die Pumpe (5) einen piezoelektrischen Stapel (13) mit Keramikscheiben (14) besitzt, von denen eine äußere Scheibe fest mit einer Schwingmembran (16) verbunden ist, die mit einem Joch (18) mit Fluideinlaß- und Auslaßöffnungen (25, 26) die Fluiddruckkammer (19) begrenzt.

3. Vorrichtung nach Anspruch 2, dadurch gekennzeichnet, daß der piezoelektrische Stapel (13) in einem Hohlraum eines Pumpenkörpers (17) angeordnet ist, und daß die andere äußere Scheibe fest mit dem Pumpenkörper verbunden ist.

4. Vorrichtung nach Anspruch 3, dadurch gekennzeichnet, daß das Joch (18), der Pumpenkörper (17) und die Membran (16) durch eine ringförmige Schweißnaht mit einer Abdichtungsfunktion für die Druckkammer verbunden sind.

5. Vorrichtung nach Anspruch 2, 3 oder 4, dadurch gekennzeichnet, daß der Pumpenkörper (17) und das Joch (18) zwischen zwei Flanschen angeordnet sind, die untereinander durch Zugstangen (24) verbunden sind.

6. Piezoelektrisch angetriebene Pumpe nach einem der vorangehenden Ansprüche, dadurch gekennzeichnet, daß sie zwischen einem Vorratsbehälter (8) und einem Empfänger einer Bremsvorrichtung für ein Kraftfahrzeugrad integriert ist.
